# EUROPÄISCHE PATENTSCHRIFT

(11) **EP 0 932 537 B1**
(45) Veröffentlichungstag und Bekanntmachung des Hinweises auf die Patenterteilung: **06.02.2002**
(21) Anmeldenummer: 97944718.2
(22) Anmeldetag: 18.09.1997
(51) Int. Cl.: B60T 8/40, B60T 8/48

(54) **SCHLUPFGEREGELTE HYDRAULISCHE FAHRZEUG-BREMSANLAGE**
SLIP-CONTROLLED HYDRAULIC VEHICLE BRAKE SYSTEM
SYSTEME DE FREINAGE HYDRAULIQUE A REGULATION ANTIPATINAGE POUR VEHICULES

(30) Priorität: 21.10.1996 DE 19643343
(43) Veröffentlichungstag der Anmeldung: 04.08.1999
(73) Patentinhaber: ROBERT BOSCH GMBH, 70442 Stuttgart (DE)
(72) Erfinder: SIEGEL, Heinz, D-70435 Stuttgart (DE)
(86) Internationale Anmeldenummer: DE9702084
(87) Internationale Veröffentlichungsnummer: WO9817516

(56) Entgegenhaltungen:
- EP-A- 0 253 157
- WO-A-96/04159
- DE-A- 3 903 532
- DE-A- 3 906 141
- DE-A- 3 909 167
- DE-A- 4 342 918
- DE-A- 4 405 918
- US-A- 5 441 336
- PATENT ABSTRACTS OF JAPAN vol. 018, no. 576 (M-1697), 4.November 1994 -& JP 06 211120 A (AISIN SEIKI CO LTD), 2.August 1994,

## Beschreibung

### Stand der Technik

Die Erfindung geht aus von einer schlupfgeregelten hydraulischen Fahrzeug-Bremsanlage nach der Gattung des Patentanspruchs 1.

Es ist schon eine solche Bremsanlage für die Vorderachse eines Fahrzeugs bekannt (DE 43 42 918 A1). Die Räder der Hinterachse werden elektromechanisch gebremst. Mit dieser Bremsanlage ist Blockierschutzregelbetrieb möglich. Der hydraulische Teil der Bremsanlage für die Schlupfregelung ist sehr einfach aufgebaut; er kommt pro Radbremse mit einem Magnetventil und einer Pumpe aus. Die kostengünstig herstellbare Bremsanlage ist insbesondere für kleine frontgetriebene Fahrzeuge geeignet.

Aus EP 0 253 157 A1 ist eine schlupfgeregelte hydraulische Fahrzeug-Bremsanlage bekannt, welche, abgesehen vom Absperrventil, der gattungsgemäßen Art entspricht und ferner eine drehrichtungsumkehrbare Pumpe besitzt. Anstelle des Absperrventils weist diese Bremsanlage einen hydraulisch oder elektrisch schaltbaren Durchflußbegrenzer auf. Mit einer derartig ausgestatteten Bremsanlage ist Blockierschutz- und Antriebsschlupfregelbetrieb möglich, wobei die Dynamik der Regelung aufgrund der Funktion des Durchflußbegrenzers eingeschränkt sein kann. Außerdem erfordert jede Radbremse mit Schlupfregelung einen eigenen Pumpenantrieb.

Es ist ferner eine Fahrzeug-Bremsanlage bekannt (DE 39 09 167 A1), bei welcher im Bremskreis angetriebener Fahrzeugräder eine drehrichtungsumkehrbare Pumpe angeordnet und über 3/3-Wegeventile mit Bremsleitungen verbindbar ist, um Blockierschutz- und Antriebsschlupfregelbetrieb zu ermöglichen.

Schließlich ist aus WO-A-96/04159 eine hydraulische Kraftfahrzeugbremsanlage mit zwischen einem Hauptbremszylinder und Radbremsen verlaufenden Bremsleitungen bekannt, in denen jeweils eine Flügelzellenpumpe angeordnet ist. Die Flügelzellenpumpen sind durch einen gemeinsamen, nicht drehrichtungsumkehrbaren Elektromotor antreibbar. Die Flügelzellenpumpen sind jeweils mit einem magnetbetätigten Hubring versehen, durch dessen Verstellung die Förderleistung und die Förderrichtung einstellbar ist.

### Vorteile der Erfindung

Die erfindungsgemäße Fahrzeug-Bremsanlage mit den kennzeichnenden Merkmalen des Patentanspruchs 1 hat demgegenüber den Vorteil, daß mit der vorgesehenen Pumpengattung sowohl Blockierschutz- als auch Antriebsschlupfregelung möglich ist bei ansonsten einfacher Ventilausstattung, d.h. es ist lediglich ein Absperrventil pro Radbremszylinder erforderlich.

Durch die in den Unteransprüchen aufgeführten Maßnahmen sind vorteilhafte Weiterbildungen und Verbesserungen der im Patentanspruch 1 angegebenen Fahrzeug-Bremsanlage möglich.

Mit der im Anspruch 2 gekennzeichneten Ausgestaltung der Fahrzeug-Bremsanlage ist einerseits im Blockierschutzregelbetrieb eine Minderung der Pulsation des Förderstromes der Pumpe und andererseits im Antriebsschlupfregelbetrieb ein ungedrosseltes Ansaugen von Druckmittel durch die Pumpe gegeben. Im Blockierschutzregelbetrieb wird eine Geräuschminderung, im Antriebsschlupfregelbetrieb eine Verbesserung der Regeldymamik erzielt.

Diese Vorteile werden ebenfalls bei der Weiterbildung der Fahrzeug-Bremsanlage nach Anspruch 3 erreicht, jedoch mit verringertem Aufwand.

Mit der im Anspruch 4 offenbarten Verbesserung wird auch eine Verringerung der Pulsation des Förderstromes der Pumpe bei Antriebsschlupfregelbetrieb, bei Blockierschutzregelbetrieb jedoch ein ungedrosselter Druckabbau aus dem Radbremszylinder erzielt.

Die Maßnahme nach Anspruch 5 vermeidet mit einfachen Mitteln bei fördernder Pumpe im Blockierschutzregelbetrieb eine Unterdruckbildung im Radbremszylinder.

Mit der Weiterbildung der Fahrzeug-Bremsanlage nach Anspruch 6 wird im Blockierschutzregelbetrieb bei Druckabbau im Radbremszylinder durch Schließen des gering federbelasteten oder federunbelasteten Rückschlagventils erreicht, daß das der Unterdruckvermeidung im Radbremszylinder dienende Druckrückhalteventil wirksam wird. Umgekehrt wird im Antriebsschlupfregelbetrieb am Rückschlagventil in vorteilhafter Weise nur ein geringer Druckabfall wirksam.

Die im Anspruch 7 gekennzeichnete Ausgestaltung der Fahrzeug-Bremsanlage macht es auf einfache Weise möglich, Einfluß auf die Druckaufbau- oder -abbaugeschwindigkeit im Radbremszylinder zu nehmen.

### Zeichnungen

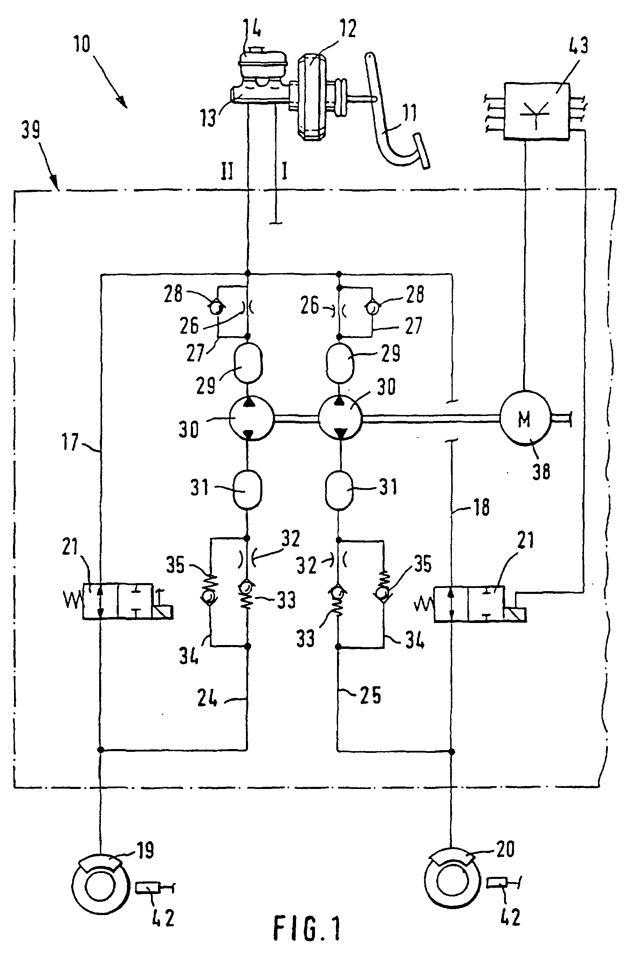

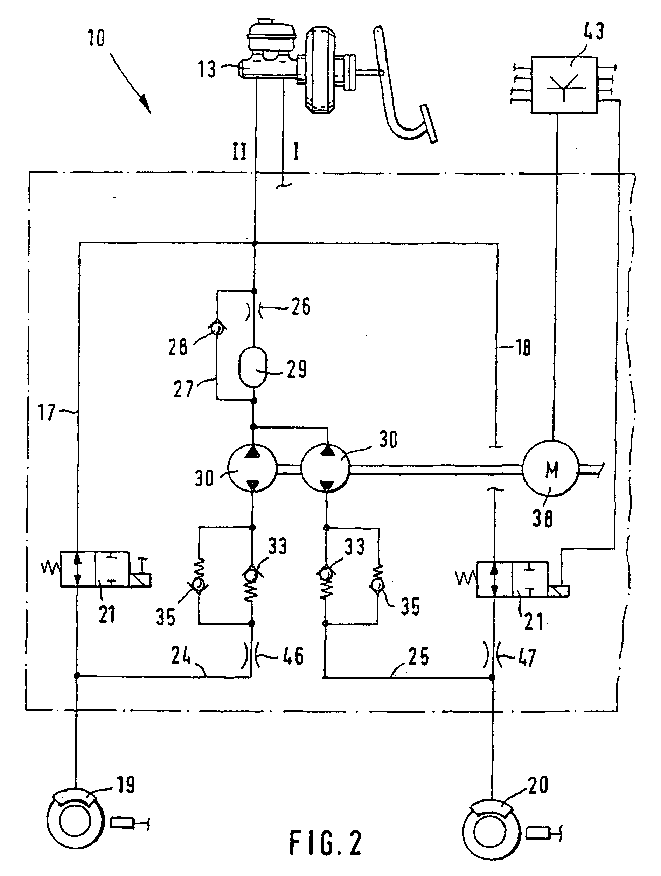

Zwei Ausführungsbeispiele der Erfindung sind in den Zeichnungen vereinfacht dargestellt und in der nachfolgenden Beschreibung näher erläutert. Es zeigen Figur 1 ein Schaltschema eine Fahrzeug-Bremsanlage mit Pumpen mit zwei Stromrichtungen und Figur 2 ein Schaltschema einer gegenüber Figur 1 vereinfachten Fahrzeug-Bremsanlage.

### Beschreibung der Ausführungsbeispiele

Das in Figur 1 dargestellte erste Ausführungsbeispiel einer schlupfgeregelten hydraulischen Fahrzeug-Bremsanlage 10 weist einen mit einem Bremspedal 11 über einen Bremskraftverstärker 12 betätigbaren, zweikreisigen Hauptbremszylinder 13 mit Druckmittel-Vorratsbehälter 14 auf. An den Hauptbremszylinder 13 sind zwei Bremskreise I und II angeschlossen, von denen in Figur 1 lediglich der Bremskreis II schematisch dargestellt ist. Der Bremskreis I ist identisch zum Bremskreis II ausgebildet.

An dem Bremskreis II sind Bremsleitungen 17 und 18 angeschlossen, von denen die Bremsleitung 17 zu einem Radbremszylinder 19 führt, der beispielsweise einer Radbremse an der Vorderachse des Fahrzeugs zugeordnet ist. Die Bremsleitung 18 steht mit einem Radbremszylinder 20 an einer Radbremse der Fahrzeug-Hinterachse in Verbindung. In der jeweiligen Bremsleitung 17, 18 ist lediglich ein Absperrventil 21 angeordnet, welches zwei Schaltstellungen aufweist, nämlich eine federbetätigte Durchlaßstellung und eine elektromagnetbetätigte Sperrstellung. Abweichend von der in Figur 1 verwendeten Darstellung des 2/2-Wegeventils mit zwei diskreten Schaltstellungen kann das Absperrventil auch als drosselndes Wegeventil mit einer unendlichen Anzahl von Zwischenschaltstellungen mit veränderlicher Drosselwirkung ausgebildet sein.

Die beiden Absperrventile 21 sind jeweils durch eine Bypassleitung 24 bzw. 25 umgangen. In jeder der beiden Bypassleitungen 24, 25 befinden sich, ausgehend vom Hauptbremszylinder 13, folgende Elemente der Bremsanlage 10:
Eine Drossel 26, die von einer Leitung 27 mit einem Rückschlagventil 28 mit Durchlaßrichtung vom Hauptbremszylinder 13 zum Radbremszylinder 19 überbrückt ist; eine Dämpferkammer 29, eine in zwei Stromrichtungen fördernde Pumpe 30, eine Dämpferkammer 31, eine Drossel 32, ein Rückschlagventil 33 mit geringer oder ohne Federbelastung, wobei die Drossel 32 und das Rückschlagventil 33 von einer Leitung 34 überbrückt sind, in der sich ein in Antiparallelschaltung zum Rückschlagventil 33 angeordnetes Druckrückhalteventil 35 befindet. Das als Drosselventil dargestellte Druckrückhalteventil 35 weist eine Durchlaßrichtung vom Radbremszylinder 19 zum Hauptbremszylinder 13 auf, das Rückschlagventil 33 in umgekehrter Richtung.

Die Pumpen 30 in den beiden Bypassleitungen 24, 25 des Bremskreises II sind ebenso wie die beiden nicht dargestellten Pumpen des Bremskreises I von einem gemeinsamen drehrichtungsumkehrbaren elektrischen Motor 38 antreibbar. Die Pumpen 30 sind als Umlaufverdrängerpumpen, beispielsweise als Flügelzellenpumpen ausgebildet.

Die vorgenannten, zwischen dem Hauptbremszylinder 13 und den Radbremszylindern 19, 20 des Bremskreises II angeordneten Elemente sind ebenso wie diejenigen des Bremskreises I in einer mit strichpunktierten Linien in Figur 1 angedeuteten, als Hydroaggregat 39 bezeichneten Baueinheit vereinigt.

Zu der Fahrzeug-Bremsanlage 10 gehören noch den Radbremsen zugeordnete Raddrehungsfühler 42 und ein elektronisches Steuergerät 43, welches aufgrund der Signale der Raddrehungsfühler 42 die Absperrventile 21 und den elektrischen Antriebsmotor 38 bei Blockierschutz- oder Antriebsschlupfregelbetrieb entsprechend vorgegebenen Regelalgorythmen schaltet.

### Die Fahrzeug-Bremsanlage 10 hat folgende Funktionsweise:

Durch Betätigen des Bremspedals 11 ist im Hauptbremszylinder 13 Druck erzeugbar, welcher durch die Bremsleitungen 17, 18 des Bremskreises II sowie diejenigen des Bremskreises I in die Radbremszylinder 19, 20 aller Fahrzeugräder übertragen wird. Tritt beim Bremsen beispielsweise am dem Radbremszylinder 20 zugeordneten Fahrzeugrad Blockiergefahr auf, so schaltet jetzt das Steuergerät 43 den elektrischen Antriebsmotor 38 ein, um mittels der in der Bypassleitung 25 liegenden Pumpe 30 Druckmittel aus dem Radbremszylinder 20 zum Hauptbremszylinder 13 zu fördern. Dabei schaltet das Steuergerät 43 das Absperrventil 21 in der Bremsleitung 18 beispielsweise durch Pulsweitenmodulation in drosselnde Zwischenstellungen, um die Druckabbaugeschwindigkeit im Radbremszylinder 20 zu beeinflussen, oder in die Sperrstellung. Das dem Radbremszylinder 20 entnommene Druckmittel fließt durch das Druckrückhalteventil 35, die Dämpferkammer 31, die Pumpe 30, die Dämpferkammer 29 und die Drossel 26 der Bypassleitung 25. Die Dämpferkammer 29 mindert in Verbindung mit der Drossel 26 von der Pumpe 30 hervorgerufene Pulsationen des Förderstromes. An eine derartige Druckabbauphase schließen sich Phasen für Druckhalten und Druckaufbau an. Durch entsprechende Steuerung des Absperrventils 21 in Zwischenstellungen ist Druckhalten in der weise möglich, daß der von der Pumpe 30 dem Radbremszylinder 20 entnommene Volumenstrom durch Druckmittel ersetzt wird, welches durch die Bremsleitung 18 zum Radbremszylinder 20 fließt. Druckaufbau im Radbremszylinder 20 wird durch Schalten des Absperrventils 21 in seine Durchlaßstellung erreicht, wobei Einfluß auf die Druckaufbaugeschwindigkeit durch Schalten des Absperrventils 21 in Zwischenstellungen oder durch Vermindern des Pumpenförderstromes durch entsprechende Steuerung des Antriebsmotors 38 möglich ist, sofern nicht eine andere Radbremse des Fahrzeugs ebenfalls Blockierschutzregelung erfordert. Erfordert der Blockierschutzregelbetrieb einen Druckabbau im Radbremszylinder 20 auf sehr niedrige Drücke, so verhindert das auf einen Schließdruck von beispielsweise 1 bar eingestellte Druckrückhalteventil 35 Unterdruckbildung im Radbremszylinder 20.

Unterliegt beim Anfahren oder Beschleunigen des Fahrzeugs beispielsweise das dem Radbremszylinder 19 zugeordnete Fahrzeugrad unzulässig großem Antriebsschlupf, so schaltet das Steuergerät 43 das Absperrventil 21 in der Bremsleitung 17 in die Sperrstellung sowie den Antriebsmotor 38 ein, um mittels der in der Bypassleitung 24 angeordneten Pumpe 30 Druckmittel vom Hauptbremszylinder 13 in den Radbremszylinder 19 zu fördern. Dabei nimmt das Druckmittel seinen Weg über das Rückschlagventil 28 in der Leitung 27, die Dämpferkammer 29, die Pumpe 30, die Dämpferkammer 31, die Drossel 32 und das Rückschlagventil 33 in der Bypassleitung 24. Während die Drossel 26 unwirksam ist, glättet die Drossel 32 den Förderstrom der Pumpe 30, so daß der Komfort der Antriebsschlupfregelung erhöht wird. Druckhalten im Radbremszylinder 19 sowie die Beeinflussung der Druckaufbau- und Druckabbaugeschwindigkeit ist entsprechend der Blockierschutzregelung ebenfalls durch Ansteuerung des Absperrventils 21 in der Bremsleitung 17 sowie des Antriebsmotors 38 in der vorbeschriebenen Weise möglich. Druckabbau im Randbremszylinder 19 erfolgt durch Schalten des Absperrventils 21 in die Durchlaßstellung.

Das in Figur 2 dargestellte zweite Ausführungsbeispiel der Fahrzeug-Bremsanlage 10 zeichnet sich durch weitere Vereinfachungen der Hydraulikschaltung aus:
Beispielsweise sind die Bypassleitungen 24, 25 zwischen dem Hauptbremszylinder 13 und den Pumpen 30 zusammengeführt und enthalten eine gemeinsame Anordnung aus Drossel 26 und
Dämpferkammer 29. Diese Anordnung ist wie beim vorangegangenen Ausführungsbeispiel im Blockierschutzregelbetrieb zur Minderung von Pulsation im Förderstrom der Pumpen 30 wirksam. Das der Anordnung zugeordnete Rückschlagventil 28 liegt in einer Leitung 27, welche im Unterschied zum vorangegangenen Ausführungsbeispiel sowohl die Drossel 26 als auch die Dämpferkammer 29 überbrückt. Hierdurch wird das Ansaugen von Druckmittel aus dem Hauptbremszylinder 13 durch die Pumpen 30 im Antriebsschlupfregelbetrieb beschleunigt.

Den jeweiligen Bypassleitungen 24, 25 ist zwischen den Pumpen 30 und den Radbremszylindern 19, 20 die aus dem ersten Ausführungsbeispiel bekannte Antiparallelschaltung von Rückschlagventil 33 und Druckrückhalteventil 35 zugeordnet. Dagegen ist auf die Dämpferkammer 31 und die Drossel 32 in der jeweiligen Bypassleitung 24, 25 zwischen den Pumpen und den Rückschlagventilen 33 verzichtet. Darüber hinaus ist in der Bypassleitung 24 eine Drossel 46 angeordnet, welche den Druckabbau im Radbremszylinder 19 im Blockierschutzregelbetrieb verlangsamt. In der dem Radbremszylinder 20 zugeordneten Bremsleitung 18 befindet sich dagegen eine zweite Drossel 47, welche im Blockierschutzregelbetrieb den Druckaufbau im Randbremszylinder 20 verlangsamt. Da in der Bypassleitung 25 zwischen der Pumpe 30 und dem Randbremszylinder 20 keine Drossel enthalten ist, erfolgt ein Druckabbau aus dem Randbremszylinder 20 beim Blockierschutzregelbetrieb mit hoher Druckabbaugeschwindigkeit, was im Hinblick auf die Schleudergefahr durch blockierte Räder an der Hinterachse des Fahrzeugs vorteilhaft ist. Mit Hilfe der Drosseln 46 und 47 ist also eine fahrzeugspezifische Anpassung der Bremsanlage 10 möglich.

## Patentansprüche

1. Schlupfgeregelte hydraulische Fahrzeug-Bremsanlage (10)
- mit zwischen einem zweikreisigen Hauptbremszylinder (13) und jeweils einem Radbremszylinder (19, 20) verlaufenden Bremsleitungen (17, 18),
- mit einem Absperrventil (21) in der jeweiligen Bremsleitung (17, 18),
- mit einer das jeweilige Absperrventil (21) umgehenden Bypassleitung (24, 25) und
- mit einer Pumpe (30) in der jeweiligen Bypassleitung (24, 25) zum Fördern von den zugeordneten Radbremszylindern (19, 20) entnommenem Druckmittel zum Hauptbremszylinder (13), **gekennzeichnet durch** die weiteren Merkmale:
- die Pumpe (30) ist auch zum Fördern von Druckmittel vom Hauptbremszylinder (13) zum Radbremszylinder (19, 20) ausgebildet,
- die Pumpe (30) ist eine Umlaufverdrängerpumpe, insbesondere eine Flügelzellenpumpe,
- die Pumpen (30) in den Bypassleitungen (24, 25) haben einen gemeinsamen, drehrichtungsumkehrbaren Antriebsmotor (38).

2. Fahrzeug-Bremsanlage nach Anspruch 1, **dadurch gekennzeichnet, daß** in der Bypassleitung (24, 25) zwischen der Pumpe (30) und dem Hauptbremszylinder (13) eine Dämpferkammer (29) und eine Drossel (26) angeordnet sind, von denen wenigstens die Drossel (26) von einer Leitung (27) mit einem gegen die Pumpe (30) öffnenden Rückschlagventil (28) umgangen ist.

3. Fahrzeug-Bremsanlage nach Anspruch 2, **dadurch gekennzeichnet, daß** die Bypassleitungen (24, 25) eines wenigstens zwei Bremsleitungen (17, 18) aufweisenden Bremskreises (II) zwischen der Pumpe (30) und dem Hauptbremszylinder (13) eine gemeinsame Anordnung aus einer Dämpferkammer (29), einer Drossel (26) und einem Rückschlagventil (28) haben.

4. Fahrzeug-Bremsanlage nach Anspruch 1, **dadurch gekennzeichnet, daß** in der Bypassleitung (24, 25) zwischen der Pumpe (30) und dem Radbremszylinder (19, 20) eine Dämpferkammer (31) und eine Drossel (32) angeordnet sind, von denen wenigstens die Drossel (32) von einem gegen die Pumpe (30) öffnenden Druckrückhalteventil (35) umgangen ist.

5. Fahrzeug-Bremsanlage nach Anspruch 1, **dadurch gekennzeichnet, daß** in der Bypassleitung (24, 25) zwischen dem Radbremszylinder (19, 20) und der Pumpe (30) ein gegen den Radbremszylinder (19, 20) öffnendes Rückschlagventil (33) angeordnet ist.

6. Fahrzeug-Bremsanlage nach Anspruch 5, **dadurch gekennzeichnet, daß** das in der Bypassleitung (24, 25) in Antiparallelschaltung zum Druckrückhalteventil (35) angeordnete Rückschlagventil (33) mit geringer oder ohne Federbelastung ausgebildet ist.

7. Fahrzeug-Bremsanlage nach Anspruch 1, **dadurch gekennzeichnet, daß** zwischen dem Randbremszylinder (20) und dem Absperrventil (21) in der Bremsleitung (18) oder zwischen dem Radbremszylinder (19) und der Pumpe (30) in der Bypassleitung (24) eine Drossel (47, 46) angeordnet ist.

## Claims

1. Slip-controlled hydraulic vehicle brake system (10),
- with brake lines (17, 18) running between a dual-circuit brake master cylinder (13) and one wheel-brake cylinder (19, 20) in each case,
- with a shut-off valve (21) in the respective brake line (17, 18),
- with a bypass line (24, 25) bypassing the respective shut-off valve (21), and
- with a pump (30) in the respective bypass line (24, 25) for feeding pressure medium extracted from the associated wheel-brake cylinders (19, 20) to the brake master cylinder (13),
**characterized by** the further features:
- the pump (30) is also designed for feeding pressure medium from the brake master cylinder (13) to the wheel-brake cylinder (19, 20),
- the pump (30) is a circulating positive-displacement pump, in particular a vane-cell pump,
- the pumps (30) in the bypass lines (24, 25) have a common drive motor (38) of reversible direction of rotation.

2. Vehicle brake system according to Claim 1, **characterized in that** the bypass line (24, 25) has arranged in it, between the pump (30) and the brake master cylinder (13), a damper chamber (29) and a throttle (26) of which at least the throttle (26) is bypassed by a line (27) having a non-return valve (28) opening counter to the pump (30).

3. Vehicle brake system according to Claim 2, **characterized in that** the bypass lines (24, 25) of a brake circuit (II) having at least two brake lines (17, 18) have, between the pump (30) and the brake master cylinder (13), a common arrangement consisting of a damper chamber (29), of a throttle (26) and of a non-return valve (28).

4. Vehicle brake system according to Claim 1, **characterized in that** the bypass line (24, 25) has arranged in it, between the pump (30) and the wheel-brake cylinder (19, 20), a damper chamber (31) and a throttle (32) of which at least the throttle (32) is bypassed by a pressure holdback valve (35) opening counter to the pump (30).

5. Vehicle brake system according to Claim 1, **characterized in that** a non-return valve (33) opening counter to the wheel-brake cylinder (19, 20) is arranged in the bypass line (24, 25) between the wheel-brake cylinder (19, 20) and the pump (30).

6. Vehicle brake system according to Claim 5, **characterized in that** the non-return valve (33) arranged in the bypass line (24, 25) in an antiparallel connection for the pressure holdback valve (35) is designed with insignificant or without spring load.

7. Vehicle brake system according to Claim 1, **characterized in that** a throttle (47, 46) is arranged between the wheel-brake cylinder (20) and the shut-off valve (21) in the brake line (18) or between the wheel-brake cylinder (19) and the pump (30) in the bypass line (24).

## Revendications

1. Système de freinage hydraulique à régulation antipatinage pour véhicules, dans lequel :
- des conduites de frein (17, 18) relient un maître-cylindre de freinage (13) à double circuit, aux cylindres de freins de roue (19, 20) respectivement,
- chaque conduite de frein (17, 18) contient une soupape d'arrêt (21),
- chaque soupape d'arrêt (21) est contournée par une conduite de by-pass (24, 25),
- une pompe (30) est montée dans chaque conduite de by-pass (24, 25) pour refouler du fluide de pression provenant du cylindre de frein de roue associé (19, 20), au maître-cylindre de freinage (13)
**caractérisé en ce que**
- la pompe (30) est constituée de manière à pouvoir également refouler du fluide de pression provenant du maître-cylindre de freinage (13) dans le cylindre de frein de roue (19, 20),
- la pompe (30) est une pompe rotative de refoulement, en particulier une pompe à cellules semi-rotatives,
- les pompes (30) montées dans les conduites de by-pass (24, 25) possèdent un moteur d'entraînement (38) commun, réversible.

2. Système de freinage selon la revendication 1,
**caractérisé en ce que**
dans la conduite de by-pass (24, 25), entre la pompe (30) et le maître-cylindre de freinage (13) sont montés une chambre d'amortissement (29) et un étranglement (26), dont au moins l'étranglement (26) est ponté par une conduite (27) comportant une soupape antiretour (28) ouvrant en direction de la pompe (30).

3. Système de freinage selon la revendication 2,
**caractérisé en ce que**
les conduites de by-pass (24, 25) d'un circuit de freinage (II) comportant au moins deux conduites de frein (17, 18) présentent entre la pompe (30) et le maître-cylindre (13) un ensemble commun constitué d'une chambre d'amortissement (29), d'un étranglement (26) et d'une soupape antiretour (28).

4. Système de freinage selon la revendication 1,
**caractérisé en ce que**
dans la conduite de by-pass (24, 25), entre la pompe (30) et le cylindre de frein de roue (19, 20) sont montés une chambre d'amortissement (31) et un étranglement (32), dont au moins l'étranglement (32) est ponté par une soupape de retenue de pression (35) ouvrant en direction de la pompe (30).

5. Système de freinage selon la revendication 1,
**caractérisé en ce que**
dans la conduite de by-pass (24, 25), entre le cylindre de frein de roue (19, 20) et la pompe (30), est montée une soupape antiretour (33) ouvrant en direction du cylindre de frein de roue (19, 20).

6. Système de freinage selon la revendication 5,
**caractérisé en ce que**
la soupape antiretour (33) montée dans la conduite de by-pass (24, 25) en antiparallélisme avec la soupape de retenue de pression (35) est soumise à une contrainte élastique faible ou nulle.

7. Système de freinage selon la revendication 1,
**caractérisé en ce qu'**
un étranglement (47, 46) est monté dans la conduite de frein (18) entre le cylindre de frein de roue (20) et la soupape d'arrêt (21), ou dans la conduite de by-pass (24) entre le cylindre de frein de roue (19) et la pompe (30).
